Europäisches Patentamt

European Patent Office

Office européen des brevets

(11) Veröffentlichungsnummer: **0 235 818**
**B1**

(12)

# EUROPÄISCHE PATENTSCHRIFT

(45) Veröffentlichungstag der Patentschrift:
31.05.89

(51) Int. Cl.⁴: **F 16 L 37/08,** F 16 L 25/02

(21) Anmeldenummer: 87103144.9

(22) Anmeldetag: 05.03.87

(54) Schubgesichterte Steckmuffenverbindung.

(30) Priorität: 05.03.86 DE 3607268

(43) Veröffentlichungstag der Anmeldung:
09.09.87 Patentblatt 87/37

(45) Bekanntmachung des Hinweises auf die Patenterteilung:
31.05.89 Patentblatt 89/22

(84) Benannte Vertragsstaaten:
AT CH FR GB IT LI NL SE

(56) Entgegenhaltungen:
DE-A-2 754 984
FR-A-2 438 222

(73) Patentinhaber: Eisenwerke Fried.Wilh. Düker
GmbH & Co., D-8782 Karlstadt (DE)

(72) Erfinder: Imhof, Erich, Fabrikstr. 13, D-8752 Laufach
(DE)
Erfinder: Vorbeck, Manfred, Spessartstr. 56, D-8752
Laufach (DE)

(74) Vertreter: Patentanwälte Leinweber &
Zimmermann, Rosental 7/II Aufg., D-8000
München 2 (DE)

EP 0 235 818 B1

## Beschreibung

Die Erfindung bezieht sich auf eine schubgesicherte Steckmuffenverbindung, insbesondere für im Schleudergußverfahren hergestellte Muffenrohre, bei der das Spitzende des einen Rohres mit radialem Spiel in das Muffenende des anderen Rohres einschiebbar ist, in dem ein Dichtring und ein von diesem getrennt ausgebildeter Klemmring angeordnet sind, der aus einer Vielzahl von in Umfangsrichtung mit gegenseitigem Abstand angeordneten Klemmsegmenten besteht, die eine ballig ausgebildete äußere Mantelfläche aufweisen, in Umfangsrichtung jeweils durch eine anvulkanisiert Zwischenschicht aus Gummi od. dgl. miteinander verbunden sind und auf ihrer Innenfläche jeweils eine Zahnung aufweisen, die bei Auftreten von axialen Kräften durch Zusammenwirken der balligen Mantelfläche mit einer sich konisch zum Ende verjüngenden Innenfläche der Rohrmuffe radial gegen das Spitzende drücken.

Bei einer bekannten Steckmuffenverbindung dieser Art (DE-A-2 034 325) ist der Dichtring vom Klemmring getrennt ausgebildet. Um beim Einführen des Spitzendes in das Muffenende eine Relativverschiebung des Spitzendes in Bezug auf die Klemmring-Dichtring-Anordnung zu ermöglichen, ist im Muffeninneren eine rückwärtige Schulter vorgesehen, an der der Dichtring zur Anlage gelangt und die die beim Verschieben auftretenden axialen Kräfte im Sinne einer Kompression des Dichtrings aufnimmt. Bei einer abgewandelten Ausführung ist eine mittlere Schulter vorgesehen, an der sich der Klemmring über an den Klemmsegmenten vorgesehene entsprechende Schultern abstützt, so daß der Dichtring, der in diesem Fall am Klemmring hängt, in axialer Richtung mehr oder weniger gestreckt wird. In beiden Fällen ist nach dem Einschieben des Spitzendes in das Muffenende zwischen der balligen Mantelfläche der Klemmsegmente und der sich konisch zum Ende verjüngenden Innenfläche der Rohrmuffe ein relativ großer Abstand vorhanden. Eine entsprechende axiale Wegstrecke muß die Klemmring-Dichtring-Anordnung bei der ersten Druckbeaufschlagung der miteinander verbundenen Rohre zurücklegen, ehe der Klemmring mit seinen Klemmsegmenten in die eigentliche Klemmlage gelangt, in der die keilartig in radialer Richtung beaufschlagte Zahnung unter der Druckwirkung das Spitzende fest erfaßt und so den Schubsicherungsverbund der Rohre gewährleistet. Es hat sich gezeigt, daß infolge des plötzlichen Axialdrucks ein mit einer Rohrverlagerung einhergehender nicht unwesentlicher Auszug aus der Muffe auftritt.

Der Erfindung liegt die Aufgabe zugrunde, die schubgesicherte Steckmuffenverbindung der vorgenannten Art so weiter auszugestalten, daß auf relativ einfache Weise eine einwandfreie Positionierung des Klemmrings mit seinen Klemmsegmenten in Bezug auf die konische Innenfläche der Muffe bzw. die Außenfläche des Rohrspitzendes sichergestellt ist.

Die Steckmuffenverbindung nach der Erfindung, bei der diese Aufgabe gelöst ist, zeichnet sich im wesentlichen dadurch aus, daß an den Klemmring ein am Muffenstirnende festlegbares, ihn tragendes Halteteil aus Elastomer angeformt ist. Dieses Halteteil hält in am Muffenstirnende festgelegtem Zustand den Klemmring in dem Muffenstirnende angenäherter Lage, aus der er beim Einschieben des Spitzendes des anderen Rohres in Abhängigkeit von den Abmessungstoleranzen mehr oder weniger axial verschoben wird. Der Klemmring gelangt beim Einschieben mit seinen Klemmsegmenten jedoch sogleich mit der konischen Muffeninnenfläche einerseits und über die Zahnung mit der Außenfläche des Spitzendes andererseits in wirksame Berührung und verbleibt in dieser Position, bis die erste Druckbeaufschlagung der Rohre erfolgt. Der Klemmring erfüllt dann sogleich ohne jede spürbare Verzögerung die von ihm geforderte Klemmfunktion.

Wird dabei die Unterbringung des Dichtrings in der Muffe eine eigene Dichtungskammer vorgesehen, dann können im Zusammenhang mit dem mit dem Halteteil zu einer Einheit verbundenen Klemmring die Dichtungsringe praktisch aller auf dem Markt befindlichen Steckmuffensysteme ("Tyton", "von Roll", "Standard", "Super-Bell") eingesetzt werden.

An dieser Stelle ist zu erwähnen, daß bereits eine Vorrichtung abweichender Gattung bekannt ist (FR-OS-2 438 222), nämlich eine dem Verbinden von muffenlosen Kunststoffrohren dienende Schnellkupplungsvorrichtung in Form einer über die Rohrenden schiebbaren Verbindungshülse, die mit jedem Rohrende einen Ringraum begrenzt, in den ein geschlitzter Dichtungsring einsetzbar ist. Für die Arretierung der Verbindungshülse in Bezug auf das eingeschobene Rohrende ist einmal die einen gleichbleibenden Außendurchmesser behaltende Verbindungshülse mit einer zum äußeren Rand hin zunehmenden Wandstärke versehen, so daß sich eine zum Rand hin geneigte Innenfläche ergibt. Zum anderen sind über die beiden Enden der Verbindungshülse schiebbare Muffen vorgesehen, die jeweils mit einem vom äußeren Muffenrand ausgehenden zylindrischen Klemmteil verbunden sind. Dieses Klemmteil ist durch axiale Schlitzung in eine Vielzahl von Kupplungszungen unterteilt, die in einen verdickten und mit Rastzähnen versehenen Bereich auslaufen und mit ihren Außenflächen an der geneigten Innenfläche der Verbindungshülse derart zur Anlage gelangen, daß bei axialer Verschiebung jeder Muffe in Bezug auf die Verbindungshülse ein radialer Druck auf die Zungen und damit über deren Zähne auf das eingeschobene Rohrende ausgeübt wird. Diese Schnellkupplungsvorrichtung weist einen verwickelten Aufbau auf und ist mit relativ hohen Gestehungskosten verbunden. Schubgesicherte Steckmuffenverbindungen der eingangs genannten Gattung, wie sie vorzugsweise bei hohen Drücken ausgesetzten Wasserversorgungsanlagen Anwendung finden, lassen sich mit einer Schnellkupplungsvorrichtung des vorstehend aufgeführten Aufbaus nicht schaffen.

Als im Hinblick auf eine einfache und sichere Handhabung besonders vorteilhaft hat es sich bei der Steckmuffenverbindung nach der Erfindung herausgestellt, wenn das Halteteil durch einen Kragen gebildet ist und einen an der Außenseite des Muffenendes zur Anlage gelangenden ringzylindrischen Abschnitt, einen sich anschließenden, an der Muffenstirnfläche zur Anlage gelangenden ringscheibenförmigen Abschnitt sowie einen sich vom Innenrand der Muffenstirnfläche zum Klemmring erstreckenden, sich etwa konisch verjüngenden Verbindungsabschnitt umfaßt, der in Abhängigkeit von den Außenabmessungen des einzuführenden Spitzendes zusammen mit dem Klemmring aufweitbar und dabei in axialer Richtung dehnbar ist.

Der so ausgebildete Kragen läßt sich bequem durch Überschieben über das Muffenstirnende an letzterem festlegen. Außerdem ermöglicht der sich konisch verjüngende Verbindungsabschnitt eine trichterartige Einführung des Spitzendes, wobei sich der Abschnitt in dem Maße aufweitet, wie dies erforderlich ist, um das Spitzende an den unmittelbar auf den Verbindungsabschnitt folgenden und sich in gleichem Maße aufweitenden Klemmring heran und in ihn hinein zuführen. Sobald die Klemmsegmente an der konischen Innenfläche des Muffenendes zur Anlage gelangen, stellen sie aufgrund der gleichzeitigen zwangsweisen Anlage an der Außenwand des eingeführten Spitzendes in besonders vorteilhafter Weise automatisch eine Rohrzentrierung sicher.

Als im Hinblick auf die geltenden gesetzlichen Forderungen, die die elektrische Leitfähigkeit von Rohr zu Rohr untersagen, sehr günstig hat es sich erwiesen, wenn der Verbindungsabschnitt des Kragens an der der sich konisch verjüngenden Innenfläche des Muffenendes zugewandten balligen Mantelfläche des Klemmrings mit einer die miteinander verbundenen Rohre elektrisch voneinander isolierenden Auflage versehen ist. Dabei ist die Auflage zweckmäßigerweise durch eine Elastomerschicht gebildet. Sie kann aber auch in sehr vorteilhafter Weise durch eine glasfaserverstärkte Kunststoffschicht gebildet sein.

In weiterer Ausgestaltung sehr vorteilhaft hat sich eine Steckmuffenverbindung erwiesen, bei der an das Halteteil eine das Rohrinnere gegen Eintritt von Fremdkörpern bzw. Verschmutzungen schützende Abdeckung angeformt ist. Vor allem wenn Rohre verlegt werden, die mit einer Innenzementierung versehen sind, ist die Verwendung einer derartigen Abdeckung äußerst nützlich, da innenzementierte Rohre im Falle einer Verschmutzung erhebliche Reinigungsproblemem aufwerfen. Die fragliche Abdeckung kann sehr einfach gestaltet sein, nämlich in Form einer flachen elastischen Membran. Bei dieser besteht jedoch die Gefahr einer Beshädigung. Als sehr günstig im Hinblick auf eine einwandfreie und sichere Abdeckung, bei der unbeabsichtigte Beschädigungen wirkungsvoll ausgeschaltet sind, hat es sich deshalb erwiesen, wenn die Abdeckung sackförmig ausgebildet ist. Auch wenn versehentlich gegen das Stirnende des Rohres mit der Abdeckung getreten wird, kommt es nicht zu einer Abdeckungsbeschädigung, da sich der Abdeckungssack ins Rohrinnere erstreckt und die Sackwandung anders als eine flache Abdeckunsmembran durch eine ungewollte Trittbeaufschlagung mit dem Fuß praktisch nicht wesentlich beansprucht wird.

Weitere Einzelheiten, Vorteile und Merkmale der Erfindung ergeben sich aus der folgenden Beschreibung und der Zeichnung, auf die bezüglich der Offenbarung aller nicht im Text beschriebenen Einzelheiten ausdrücklich verwiesen wird. Es zeigen:

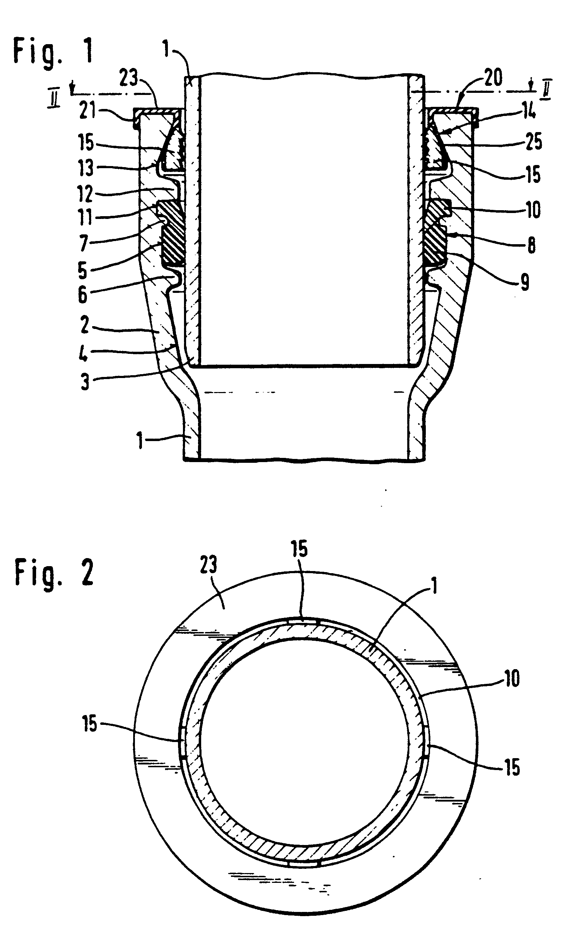

Fig. 1 einen Schnitt durch das Spitzende eines Rohres mit übergeschobenem Muffenende des angrenzenden Rohres,
Fig. 2 einen Schnittansicht entsprechend der Linie II - II der Fig. 1,
Fig. 3 einen Ausschnitt aus Fig. 1, in größerem Maßstab, und
Fig. 4 einen Schnitt durch das äußere Ende des Muffenendes mit aufgesetztem Kragen und mit diesem einstückig ausgebildeter Abdeckung.

Wie aus der Zeichnung ersichtlich, weist das Muffenrohr 1 an seinem einen Ende, dem Muffenende 2 eine Muffe auf, in die mit radialem Spiel das Spitzende 3 eines angrenzenden Muffenrohres 1 eingeschoben werden kann. Im Inneren der Muffe ist eine Ausnehmung 4 vorgesehen, die in bestimmten Grenzen eine Relativverschwenkung der Rohre 1 zuläßt. Im Anschluß an diese Ausnehmung ist eine Abdichtungskammer 5 gebildet, die axial nach außen durch eine radial verlaufende Innenschulter 6 des Muffenendes 2 begrenzt ist. Im Abstand von der Innenschulter 6 verläuft im Bereich der Abdichtungskammer 5 ein Ringwulst 7. Dieser dient der Lagesicherung eines Dichtrings 8, der einen Kopfabschnitt 9 aus weicherem elastomerem Material und einen Fußabschnitt 10 aushärterem elastomerem Material aufweist. Dieser Fußabschnitt 10 befindet sich in einer Ringnut 11, die einerseits von dem Ringwulst 7 und andererseits von einer Stützschulter 12 begrenzt ist. Der Dichtring 8 ist auf diese Weise in seiner Position festgelegt und behält die veranschaulichte Position auch dann bei, wenn das Spitzende 3 unter Verformung des Kopfabschnittes 9 in das Muffenende 2 eingeführt wird. Zwischen der Stützschulter 12 und dem stirnseitigen Ende des Muffenendes 2 befindet sich eine Verriegelungskammer 13, die der Aufnahme eines Klemmrings 14 dient. Dieser Klemmring 14 besteht aus einer Vielzahl, im veranschaulichten Fall vier von in Umfangsrichtung mit gegenseitigem Abstand angeordneten Klemmsegmenten 15. Diese Klemmsegmente 15 sind in Umfangsrichtung jeweils durch eine anvulkanisierte Zwischenschicht 16 aus Gummi od. dgl. miteinander verbunden. Auf ihrer der Verriegelungskammer 13 zugewandten Seite weisen die Klemmsegmente 15 jeweils eine ballig ausgebildete äußere Mantelfläche 17 auf. Diese wirkt mit einer sich konisch zum Ende verjüngenden Innenfläche 18 der Rohrmuffe zusammen, und zwar wird durch sie eine auf der Innenfläche der Klemmsegmente 15 jeweils vorgesehene Zahnung 19 bei Auftreten von axialen Kräften radial gegen das Spitzende 3 gedrückt.

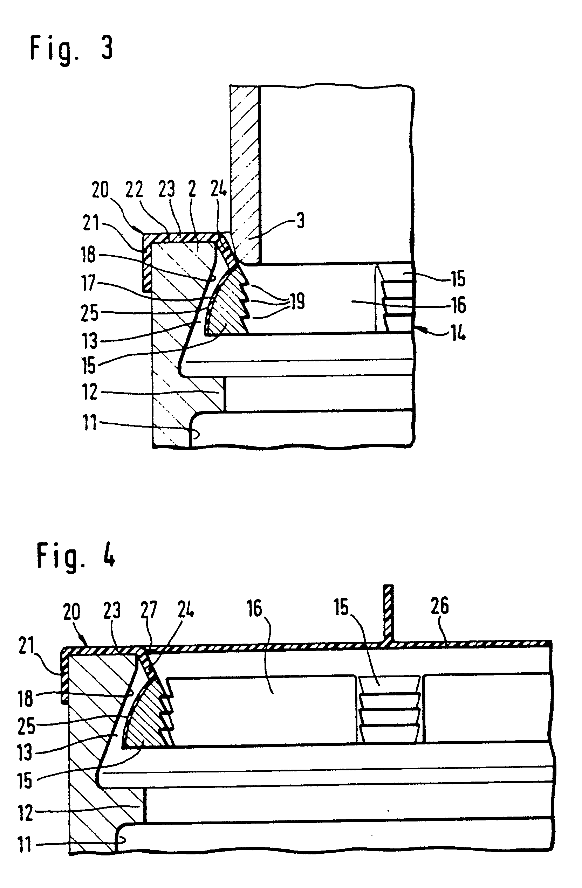

Wie besonders deutlich aus Fig. 3 hervorgeht, ist an den Klemmring 14 ein am Muffenstirnende festlegbarer, ihn tragender Kragen 20 aus Elastomer angeformt. Dieser Kragen 20 umfaßt einen an der Außenseite des Muffenendes 2 zur Anlage gelangenden ringzylindrischen Abschnitt 21, einen sich anschließenden, an der Muffenstirnfläche 22 zur Anlage gelangenden ringscheibenförmigen Abschnitt 23 sowie einen sich vom Innenrand der Muffenstirnfläche zum Klemmring 14 erstreckenden, sich etwa konisch verjüngenden Verbindungsabschnitt 24. Dieser ist in Abhängigkeit von den Außenabmessungen des einzuführenden Spitzendes 3 zusammen mit dem Klemmring 14 aufweitbar und dabei in axialer Richtung dehnbar.

Aus Fig. 3 geht ferner hervor, daß der Verbindungsabschnitt 24 des Kragens 20 an der balligen Mantelfläche 17 des Klemmrings 14, die der sich konisch verjüngenden Innenfläche 18 des Muffenendes 2 zugewandt ist, mit einer isolierenden Auflage 25 versehen ist, die dazu dient, die miteinander verbundenen Rohre elektrisch voneinander zu isolieren. Diese Auflage 25 kann durch eine Elastomerschicht gebildet sein, vorzugsweise besteht sie jedoch aus einer glasfaserverstärkten Kunststoffschicht.

Wie aus Fig. 4 hervorgeht, ist an den Kragen 20 eine das Rohrinnere gegen Eintritt von Fremdkörpern bzw. Verschmutzungen schützende Abdeckung 26 angeformt. Im veranschaulichten Ausführungsbeispiel ist die Abdeckung 26 in Form einer flachen elastischen Membran ausgebildet. Stattdessen kann sie auch sackförmig ausgebildet sein. Aus Fig. 4 ist auch entnehmbar, daß im Bereich des Kragens 20 eine Materialschwächung bzw. Perforation 27 vorgesehen ist, die das leichte Abreißen bzw. Herausschneiden der Abdeckung 26 unmittelbar vor der Montage ermöglicht. Auf diese Weise sind Verschmutzungen der Innenräume der Rohre und Formstücke auf ihrem Transport und auf der Baustelle wirksam vermieden.

**Patentansprüche**

1. Schubgesicherte Steckmuffenverbindung, insbesondere für im Schleudergußverfahren hergestellte Muffenrohre (1), bei der das Spitzende (3) des einen Rohres mit radialem Spiel in das Muffenende (2) des anderen Rohres einschiebbar ist, in dem ein Dichtring (8) und ein von diesem gekennt ausgebildet Klemmring (14) angeordnet sind, der aus einer Vielzahl von in Umfangsrichtung mit gegenseitigem Abstand angeordneten Klemmsegmenten (15) besteht, die eine ballig ausgebildete äußere Mantelfläche (17) aufweisen, in Umfangsrichtung jeweils durch eine anvulkanisierte Zwischenschicht (16) aus Gummi od. dgl. miteinander verbunden sind und auf ihrer Innenfläche (18) jeweils eine Zahnung (19) aufweisen, die bei Auftreten von axialen Kräften durch Zusammenwirken der balligen Mantelfläche (17) mit einer sich konisch zum Ende verjüngenden Innenfläche (18) der Rohrmuffe radial gegen das Spitzende (3) drücken, dadurch gekennzeichnet, daß an den Klemmring (14) ein am Muffenstirnende festlegbares, ihn tragendes Halteteil (20) aus Elastomer angeformt ist.

2. Steckmuffenverbindung nach Anspruch 1, dadurch gekennzeichnet, daß das Halteteil (20) durch einen Kragen gebildet ist und einen an der Außenseite des Muffenendes zur Anlage gelangenden ringzylindrischen Abschnitt (21), einen sich anschließenden, an der Muffenstirnfläche (22) zur Anlage gelangenden ringscheiben-förmigen Abschnitt (23) sowie einen sich vom Innenrand der Muffenstirnfläche (22) zum Klemmring (14) erstreckenden, sich etwa konisch verjüngenden Verbindungsabschnitt (24) umfaßt, der in Abhängigkeit von den Außenabmessungen des einzuführenden Spitzendes (3) zusammen mit dem Klemmring (14) aufweitbar und dabei in axialer Richtung dehnbar ist.

3. Steckmuffenverbindung nach Anspruch 2, dadurch gekennzeichnet, daß der Verbindungsabschnitt (24) des Kragens an der, der sich konisch verjüngenden Innenfläche (18) des Muffenendes (2) zugewandten balligen Mantelfläche (17) des Klemmrings (14) mit einer die miteinander verbundenen Rohre elektrisch voneinander isolierenden Auflage (25) versehen ist.

4. Steckmuffenverbindung nach Anspruch 3, dadurch gekennzeichnet, daß die Auflage (25) durch eine Elastomerschicht gebildet ist.

5. Steckmuffenverbindung nach Anspruch 3, dadurch gekennzeichnet, daß die Auflage (25) durch eine glasfaserverstärkte Kunststoffschicht gebildet ist.

6. Steckmuffenverbindung nach einem der Ansprüche 1 bis 5, dadurch gekennzeichnet, daß an das Halteteil (20) eine das Rohrinnere gegen Eintritt von Fremdkörpern bzw. Verschmutzungen schützende Abdeckung (26) angeformt ist.

7. Steckmuffenverbindung nach Anspruch 6, dadurch gekennzeichnet, daß die Abdeckung (26) in Form einer flachen, elastischen Membran ausgebildet ist.

8. Steckmuffenverbindung nach Anspruch 6, <u>dadurch gekennzeichnet</u>, daß die Abdeckung (26) sackförmig ausgebildet ist.

9. Steckmuffenverbindung nach einem der Ansprüche 6 bis 8, <u>dadurch gekennzeichnet</u>, daß im Bereich des Kragens eine das leichte Abreißen der Abdeckung (26) ermöglichende Materialschwächung bzw. Perforation (27) vorgesehen ist.

## Claims

1. A shearing-protected spigot-and-socket joint, more particularly for socket pipes (1) produced in the centrifugal casting process, wherein the spigot end (3) of the one pipe can be pushed with radial clearance into the socket end (2) of the other pipe in which a sealing ring (8) and a clamping ring (14), formed separately from the latter, are arranged, said clamping ring consisting of a plurality of clamping segments (15) which are arranged in the peripheral direction with mutual spacing and which have a spherically formed external surface area (17), are connected with each other in the peripheral direction, in each case, by means of a moulded-on intermediate layer (16) of rubber or the like and have on their inner surface (18), in each case, a toothing (19) pressing radially against the spigot end (3) when axial forces result through cooperation of the spherical surface area (17) with an inner surface (18) of the pipe socket tapering conically to the end, characterised in that pre-formed on the clamping ring (14) there is a holding part (20) which can be fixed on the front end of the socket, supports said clamping ring and is made of elastomer.

2. A spigot-and-socket joint according to claim 1, characterised in that the holding part (20) is formed by a collar and comprises an annular-cylindrical section (21), which is installed on the outside of the socket end, a connected annular-disk shaped section (23), which is installed on the socket front surface (22), and also a joining section (24), which extends from the inner edge of the socket front surface (22) to the clamping ring (14), tapers substantially conically, can be widened together with the clamping ring (14) as a function of the external dimensions of the spigot end (3) to be inserted and can thereby be extended in an axial direction.

3. A spigot-and-socket joint according to claim 2, characterised in that the joining section (24) of the collar is provided with a facing (25) which is on the spherical surface area (17) of the clamping ring (14) facing the conically tapering inner surface (18) of the socket end (2) and which insulates the connected pipes electrically one from the other.

4. A spigot-and-socket joint according to claim 3, characterised in that the facing (25) is formed by an elastomer layer.

5. A spigot-and-socket joint according to claim 3, characterised in that the facing (25) is formed by a glass-fibre-reinforced plastics layer.

6. A spigot-and-socket joint according to any one of the claims 1 to 5, characterised in that a cover (26), which protects the inside of the pipe against the entry of foreign bodies or dirt accumulation, is preformed on the holding part (20).

7. A spigot-and-socket joint according to claim 6, characterised in that the cover (26) is constructed in the form of a flat, elastic membrane.

8. A spigot-and-socket joint according to claim 6, characterised in that the cover (26) is constructed in the form of a sack.

9. A spigot-and-socket joint according to any one of the claims 6 to 8, characterised in that a weakening in the material or perforation (27), making it possible to tear off the cover (26) easily, is provided in the region of the collar.

## Revendications

1. Système de couplage à manchon protégé contre le cisaillement, notamment pour des tubes manchonnés (1) fabriqués selon le procédé de coulée centrifuge, système dans lequel l'extrémité effilée (3) de l'un des tuyaux est emboîtable avec un jeu radial dans l'extrémité manchonnée (2) de l'autre tube, dans laquelle sont placés un anneau d'étanchéité (8) et, conformé séparément de celui-ci, un anneau de serrage (14), lequel est constitué par une pluralité de segments de serrage (15) situés à distance réciproque en direction périphérique, segments qui présentent une surface latérale externe de forme convexe (17), qui sont respectivement reliés, en direction périphérique, par une couche intercalaire (16) à vulcanisation commencée, en caoutchouc ou analogue et qui, respectivement, présentent sur leur surface interne (18) une denture (19), segments qui, en présence de forces axiales, appuient radialement contre l'extrémité effilée (3) par coopération de la surface latérale convexe (17) avec une surface interne (18) du manchon tubulaire qui va en se rétrécissant en cône, <u>caractérisé en ce que</u> sur l'anneau de serrage (14) est façonnée une pièce de retenue (20) en élastomère portant ledit anneau.

2. Système de couplage à manchon selon la revendication 1, <u>caractérisé en ce que</u> la pièce de retenue (20) est formée par un collet et comporte un segment annulaire cylindrique (21) venant au contact de la face externe de l'extrémité du manchon, s'y raccordant, un segment en forme de disque annulaire (23) venant au contact de la surface frontale du manchon (22), ainsi qu'un segment de jonction (24) s'étendant en se rétrécissant en cône, du bord interne de la surface frontale du manchon (22) à l'anneau de serrage (14), segment qui, en fonction des dimensions extérieures de l'extrémité effilée (3) à introduire, peut s'élargir en même temps que l'anneau de serrage (14) et, est en même temps extensible en direction axiale.

3. Système de couplage à manchon selon la revendication 2, caractérisé en ce que le segment de jonction (24) du collet est pourvu sur la surface latérale convexe (17) de l'anneau de serrage (14), tourné vers la surface interne (18) de l'extrémité du manchon (2) qui se rétrécit en cône, d'un revêtement (25) isolant électriquement l'un de l'autre les tubes assemblés.

4. Système de couplage à manchon selon la revendication 3, caractérisé en ce que le revêtement (25) est constitué par une couche d'élastomère.

5. Système de couplage à manchon selon la revendication 3, caractérisé en ce que le revêtement (25) est constitué par une couche en matière synthétique renforcée par fibres de verre.

6. Système de couplage à manchon selon l'une des revendications 1 à 5, caractérisé en ce qu'à la pièce de retenue (20) est adjoint un recouvrement (26) garantissant l'intérieur du tube contre l'entrée de corps étrangers et de pollutions.

7. Système de couplage à manchon selon la revendication 6, caractérisé en ce que le recouvrement (26) se présente sous forme d'une membrane élastique plane.

8. Système de couplage à manchon selon la revendication 6, caractérisé en ce que le recouvrement (26) est réalisé sous forme de sac.

9. Système de couplage à manchon selon l'une des revendications 6 à 8, caractérisé en ce que dans la zone du collet est prévu un affaiblissement de matériau ou une perforation (27) permettant un arrachement facile du recouvrement (26).

Fig. 1

Fig. 2

Fig. 3

Fig. 4